# EUROPEAN PATENT APPLICATION

(11) **EP 2 241 358 A2**
(43) Date of publication of application: **20.10.2010**
(21) Application number: 09179387.7
(22) Date of filing: 16.12.2009
(51) Int. Cl.: A63F 13/12

(54) **Client terminal, game service apparatus, and game service system and method thereof**

(30) Priority: 14.04.2009 KR 20090032217
(71) Applicant: Electronics and Telecommunications Research Institute, Daejeon 305-350 (KR)
(72) Inventor: Lee, Hun Joo, 305-350, Daejeon (KR); Lee, Manjai, 305-350, Daejeon (KR); Yang, Kwang Ho, 305-350, Daejeon (KR); Park, Chang Joon, 305-350, Daejeon (KR)
(74) Representative: Schöniger, Franz-Josef

(57) **Abstract**

A client terminal includes: a communication module for performing communication with a game service apparatus via a wired/wireless communication network; and a display unit for displaying a content of a message transmitted between a game user and a non-player character (NPC) during progress of an online game serviced by the game service apparatus. The terminal further includes a control unit for controlling so as to display the content of the message during progress of the online game, controlling so as to display a translated message of the content of the message provided from the game service apparatus upon a request of the game user, and transmitting modification data including edition data made by editing the translated message to the game service apparatus.

## Description

The present invention relates to a game service technique for conducting an online game, and more particularly, to a client terminal, a game service apparatus, and a game service system and method, which are suitable for applying a modification of a translated message to a game service during an online game.

Development and wide spread of the internet have effected on various industries. Especially, the progress of the data transfer rate of the internet allows netizens to enjoy many games over a network, and the game industry is currently leading the changes in the field of information communication.

As this game industry has become one of the important information industries, users who are interested in games are more and more increasing, and many and diverse web sites for these people are being introduced worldwide. Among these web sites, an online game is set up so that a certain account may be established by a user's request and then the user who gains access through the account may create a group themselves or join a group with other users to play game and achieve a given objective of the game. Therefore, the achievement of the objective may increase the abilities of the character specified by the user upon setting up the account and hence provide the user with a feeling of accomplishment.

Typically, in the online game, a group of users is built up on the network to achieve a same object in cooperation with one another and, therefore, the online game is helpful for enhancing the affinity between the users. Since users from various countries access to the online game, international exchange among the game users is possible during playing the online game.

During playing of the online game, the user occasionally needs to have a conversation with a game operator when he/she has a question of a game rule or unexpected matter has happened to them. In case where the user is not a person who uses native language of the country providing the online game service, conversations between the user and the operator need to be translated.

For conventional techniques of translating messages in the online game will be described below.

A user accesses an online game, gets a translating solution and runs it, has the online game loaded, and when a foreign language dialogue takes place, the dialogue is translated and displayed through the translating solution, or when the user writes, in their native language, a chatting message required between users of different languages who have accessed the online game, the message is translated into a different language and transmitted.

However, of the aforementioned conventional techniques, the former technique simply provides a dialogue stored in a database by automatic translation and thus cannot actively correct wrong translation or error if any. Also, the latter technique cannot correct any distortion in translation, if any, when a dialogue is translated from a native language into a different language or vice versa.

Therefore, the present invention provides a client terminal, a game service apparatus, and a game service system and method, which can actively modify the content of a translated message if modification is required.

In accordance with a first aspect of the present invention, there is provided a client terminal including: a communication module for performing communication with a game service apparatus via a wired/wireless communication network; a display unit for displaying a content of a message transmitted between a game user and a non-player character (NPC) during progress of an online game serviced by the game service apparatus; and a control unit for controlling so as to display the content of the message during progress of the online game, controlling so as to display a translated message of the content of the message provided from the game service apparatus upon a request of the game user, and transmitting modification data including edition data made by editing the translated message to the game service apparatus.

In accordance with a second aspect of the present invention, there is provided a game service apparatus including a game service server for providing an online game service to a client terminal that has requested an online game, extracting a translated message corresponding to a source message which is made by a game user to be transmitted from the user to a non-player character (NPC) and transmitting the translated message to the client terminal and storing modification data of the translated message; and a game information database for storing game service information and the modification data.

In accordance with a third aspect of the present invention, there is provided a game service system including: a client terminal for displaying a content of a message between a game user and a non-player character (NPC); and a game service apparatus providing an online game service to a client terminal that has requested an online game, extracting a translated message corresponding to a source message which is made by a game user to be transmitted from the user to a non-player character (NPC) and transmitting the translated message to the client terminal and storing modification data of the translated message sent from the client terminal in a game information database.

In accordance with a fourth aspect of the present invention, there is provided with a game service method, including: checking whether there is a request to send a message from a game user to a non-player character (NPC) during progress of an online game; when the request is present, extracting, by a game service apparatus, translated message of the message and transmitting the translated message to a client terminal of the game user; editing the translated message to generate an edited message by the game user when the translated message is determined to be incorrect and transmitting the translated message modified to the game service apparatus; storing the edited message in a game information database by the game service apparatus.

The above and other objects and features of the present invention will become apparent from the following description of preferred embodiments, given in conjunction with the accompanying drawings, in which:
Fig. 1 shows a block diagram of a game service system which is suitable to request a modification of the content of a translated dialogue and apply the modification in accordance with an embodiment of the present invention;
Fig. 2 illustrates a block diagram of a client terminal which modifies displayed translated message in accordance with the embodiment of the present invention;
Fig. 3 presents a flow chart describing a procedure of requesting a modification of the content of a translated dialogue and applying the modification in accordance with the embodiment of the present invention; and
Fig. 4 offers a view illustrating the screen of the client terminal displayed for modifying the content of the translated dialogue in accordance with the embodiment of the present invention.

Hereinafter, embodiments of the present invention will be explained in detail with reference to the accompanying drawings which form a part hereof.

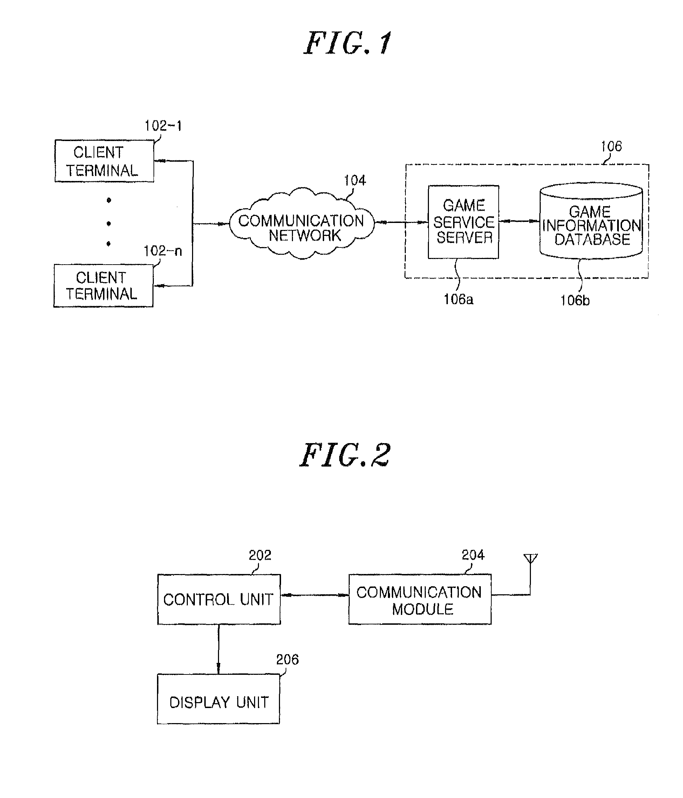

Fig. 1 illustrates a block diagram of a game service system in accordance with an embodiment of the present invention. The game service system includes client terminals 102-1 to 102-n, a communication network 104, and a game service apparatus 106. Here, the game service apparatus 106 includes a game service server 106a and a game information database 106b.

Referring to Fig. 1, each of the client terminals 102-1 to 102-n, which may be, e.g., a PC (Personal Computer), a notebook, or the like, includes a communication module 204 which takes charge of data communication , a control unit 202 for driving an online game using various application programs and controlling each component in the game service system, and a display unit 206 for displaying the online game, as shown in Fig. 2. When each of the client terminals 102-1 to 102-n accesses to the game service apparatus 106 to request an online game service, game service information corresponding to the requested online game service is continuously received from the game service apparatus 106, and the online game is driven in response to the received game service information. Here, the driving of the online game should be understood as a concept including, e.g., character creation, participation in the game using created characters, and the like.

During playing the online game using characters, when a user inputs a message including, e.g., an inquiry about the progress of the game to send to non-player characters (NPCs), user's client terminals 102-1 to 102-n display the content of the massage on a screen of the display unit 206. Here, the display screen may include, e.g., a game progress screen 402, a source language display window 404, a translation language display window 406 and a dialogue edition window 408.

In addition, the client terminals 102-1 to 102-n transmit modification data (e.g., source language data, translated language data and massage edition data) to the game service apparatus 106 via the communication network 104 when a modification request signal is input through the edition of the displayed message of the translation language. Thereafter, upon completion of approval of the corresponding modification data, a corresponding reward (e.g., character level-up, free game item or the like) can be provided from the game service apparatus 106.

The communication network 104 includes any wired/wireless communication standards, such as local area network (LAN), wireless local area network (WLAN), WiFi, and Wibro, and supports data communication (e.g., game service request, transmission of game service information, transmission of game progress information, message data transmission/reception, transmission of modification data, and the like) between the client terminals 102-1 to 102-n and the game service apparatus 106.

The game service apparatus 106 is for providing an online game, which includes the game service server 106a and the game information database 106b. When an online game service is requested from the client terminals 102-1 to 102-n, the corresponding game service information is extracted from the game information database 106b and transmitted to the client terminals 102-1 to 102-n.

Also, when a dialogue with an NPC is requested from each of the client terminals 102-1 to 102-n, the game service apparatus 106 extracts the corresponding translated message from the game information database 106b and transmits it to the client terminal 102-1 to 102-n. The translated message is provided as translated language data in a language of a country of a game company providing the online game service.

In addition, when the modification data is transmitted upon a request for modification of the content of the message corresponding to the translated message from the client terminals 102-1 to 102-n, the game service apparatus 106 transmits to an online game administrator the modification data including the source language data, translated language data, and message edition data. Thereafter, upon completion of approval of the message edition data from an online game administrator, the message edition data is updated to the game information database 106b.

Then, in case the game administrator approves the message edition data, the game service apparatus 106 provides a reward, such as character level-up and free game item, to the corresponding user (i.e., the user's character) who has provided the message edition data.

Here, the game information database 106b may store a variety of game information, e.g., game progress information, game service information, character information, translated message and on the like, and these information may be extracted, provided to the game service server 106a, and modified and upgraded, if necessary.

Now, a description will be made with respect to a procedure of translation, modification and updating of the content of a message from a game user to an NPC, during a progress of an online game in the game service system having the above-described configuration.

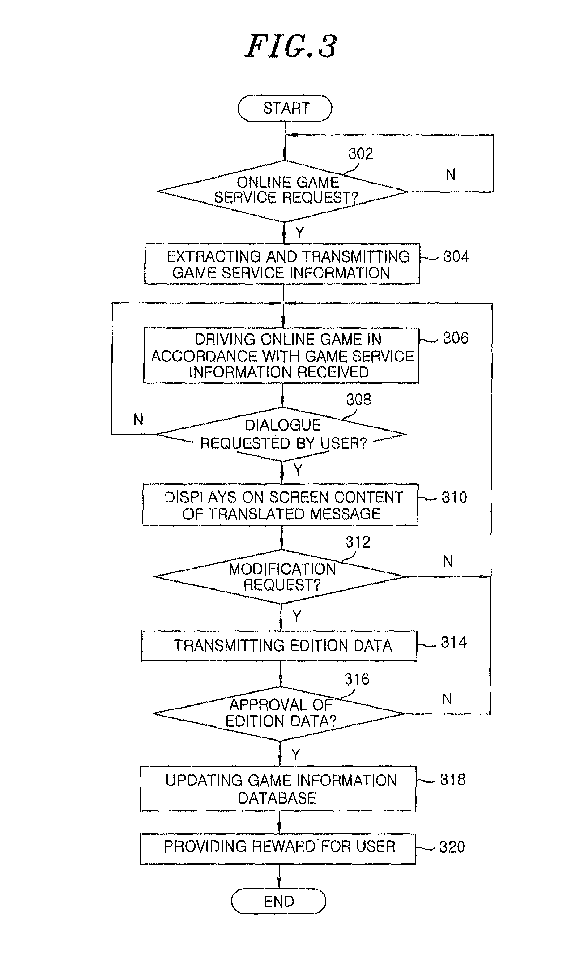

Fig. 3 is a flow chart describing the procedure of requesting a modification of the content of a translated dialogue and applying the modification in accordance with the embodiment of the present invention.

Referring to Fig. 3, in the standby mode of the game service system, the control unit 202 of one of the client terminals, e.g., 102-1 checks at step 302 whether or not an operation signal requesting an online game service has been input.

As a result of checking at step 302, if the operation signal requesting the online game service is input, the control unit 202 of the client terminal 102-1 accesses the game service apparatus 106 via the communication network 104 using the communication module 204. Then, the control unit 202 requests the online game service, and thus the game service server 106a extracts game service information on the corresponding online game from the game information database 106b and transmits it to the corresponding client terminal via the communication network 104 at step 304.

Then, at step 306, the control unit 202 drives (conducts) the corresponding online game by displaying a screen through the display unit 206 while driving a corresponding application program in response to the game service information received through the communication module 204. Here, the driving of the online game may be performed by, e.g., game character creation or loading and real-time transmission of a variety of information including game progress information.

Next, at step 308, the control unit 202 of the client terminal 102-1 checks whether or not a dialogue for, e.g., inquiring the progress of the game, has been requested by the user during the progress of the online game. Here, the request for a dialogue may be performed by, e.g., clicking a specific menu displayed on the game screen, depending on the settings of the online game.

As a result of checking at step 308, if the dialogue has been requested by the user, the control unit 202 of the user's client terminal 102-1 transmits the game service apparatus 106 for the content of the message via the communication network 104. Then, the game service server 106a extracts translated message corresponding to the content of the sent message from the game information database 106b and transmits it to the corresponding client terminal 102-1 via the communication network 104. Therefore, the control unit 202 of the corresponding client terminal receives the translated message through the communication module 204 and displays on the screen the content of the corresponding translated message by the display unit 206a at step 310. Here, the extracted translated message is translated language data in a language of a country of a game company providing the online game service.

Next, at step 312, the control unit 202 of the client terminal 102-1 checks whether or not an operation signal requesting modification of the content of the message displayed through the display unit 206 is input.

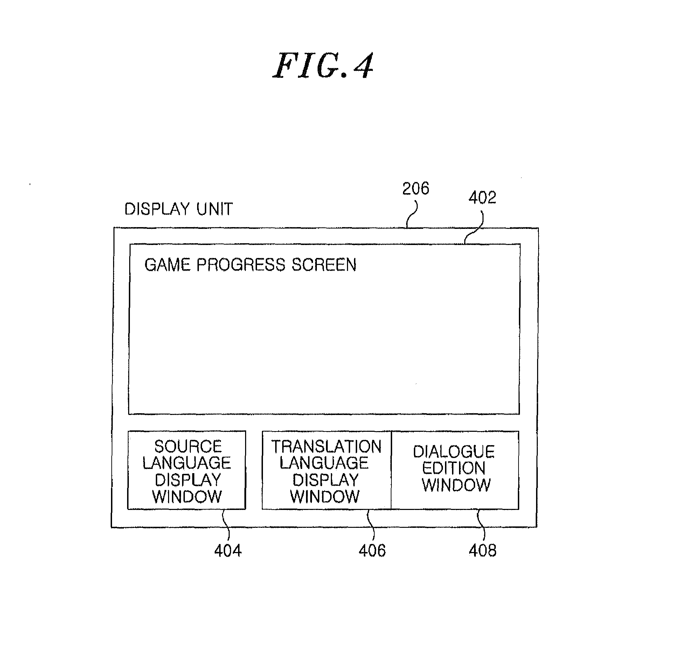

Fig. 4 is a view illustrating the screen of the client terminal displayed for modifying the content of the translated message in accordance with the embodiment of the present invention. The content of the dialogue depending on the translated message is displayed through the source language display window 404 and the translation language display window 406, and is edited through the dialogue edition window 408 in the screen.

Then, at step 314, the control unit 202 of the client terminal 102-1 transmits the modification data including the edition data, which is edited through the dialogue edition window 408, to the game service apparatus 106 via the communication network 104 using the communication module 204.

Meanwhile, the game service server 106a transmits the modification data transmitted from the client terminal 102-1, and checks whether the game administer approves the edition data at step 316.

As a result of checking at step 316, if the approval has been made by the administrator, the game service server 106a updates the game information database 106b with the approved edition data at step 318.

Thereafter, at step 320, the game service server 106a provides a reward for the user depending on preset reward conditions (for example, character level-up, free game item and the like). A notification message for this reward may be provided to the client terminal 102-1 used by the user.

As results of checking at steps 308, 312, and 316, if there is no request for a message sent to the NPC, there is no request for modification of the content of the dialogue, or there is no approval of edition data, the online game being participated by the user can continue to progress.

Therefore, if there is a need for modification of a translated message during progress of an online game, the user can modify through the dialogue edition part 408 and can improve translation performance on online games by selective approval upon receipt of a request for application of the modification.

Further, the present invention can be also applied to a case in which the NPC's reply for the message of the user is translated by the game service server 106a in the user's language, the translated reply is transmitted to the user, and the user modifies the translated reply when it has been incorrectly translated.

As described above, unlike the conventional method in which a user gets the required content during a game by automatic translation, the present invention can apply a modification by a user to a game service and hence effectively correct translation errors, by extracting corresponding translated message in the event of a dialogue between the user and an NPC during progress of the online game, transmitting it to the client terminal of the user and displaying the content of the dialogue, and then modifying and storing the translated dialogue by using corresponding modification data if there is a need for modification of the displayed content of the dialogue.

Therefore, the present invention allows a user to participate in translation of the dialogue from the user's viewpoint, and thus a burden of dialogue database establishment, which may occur in a stage of game development or in localization of games, can be reduced and the participating user can get a reward, thereby creating a new game business model.

While the invention has been shown and described with respect to the particular embodiments, it will be understood by those skilled in the art that various changes and modification may be made without departing from the scope of the present invention as defined in following claims.

## Claims

1. A client terminal, comprising:
a communication module for performing communication with a game service apparatus via a wired/wireless communication network;
a display unit for displaying a content of a message transmitted between a game user and a non-player character (NPC) during progress of an online game serviced by the game service apparatus; and
a control unit for controlling so as to display the content of the message during progress of the online game, controlling so as to display a translated message of the content of the message provided from the game service apparatus upon a request of the game user, and transmitting modification data including edition data made by editing the translated message to the game service apparatus.

2. The client terminal of claim 1, wherein the translated message is language data translated in a language of a country of a game company providing the online game.

3. A game service apparatus, comprising:
a game service server for providing an online game service to a client terminal that has requested an online game, extracting a translated message corresponding to a source message which is made by a game user to be transmitted from the user to a non-player character (NPC) and transmitting the translated message to the client terminal and storing modification data of the translated message; and
a game information database for storing game service information and the modification data.

4. The game service apparatus of claim 3, wherein the translated message is language data translated in a language of a country of a game company providing the online game.

5. The game service apparatus of claim 3 or 4, wherein the modification data includes the source message, the translated message, and an edited message which is made by the game user by modifying the translated message when the translated message is determined to be incorrect.

6. The game service apparatus of one of claims 3 to 5, wherein the modification data is subjected to approval processing before being stored in the game information database.

7. The game service apparatus of one of claims 3 to 6, wherein the game service server provides a reward for the game user upon approval of the modification data and storing the modification information.

8. A game service system, comprising:
a client terminal for displaying a content of a message between a game user and a non-player character (NPC); and
a game service apparatus providing an online game service to a client terminal that has requested an online game, extracting a translated message corresponding to a source message which is made by a game user to be transmitted from the user to a non-player character (NPC) and transmitting the translated message to the client terminal and storing modification data of the translated message sent from the client terminal in a game information database.

9. The game service system of claim 8, wherein the translated message in a language of a country of a game company providing the online game.

10. The game service system of claim 8 or 9, wherein the modification data includes the source message, the translated message, and an edited message, which is made by the game user by modifying the translated message when the translated message is determined to be incorrect.

11. The game service system of one of claims 8 to 10, wherein the modification data is subjected to approval processing before being stored in the game information database.

12. The game service system of one of claims 8 to 11, wherein the game service server provides a reward for the game user upon approval of the modification data and storing the modification information.

13. A game service method, comprising:
checking whether there is a request to send a message from a game user to a non-player character (NPC) during progress of an online game;
when the request is present, extracting, by a game service apparatus, translated message of the message and transmitting the translated message to a client terminal of the game user;
editing the translated message to generate an edited message by the game user when the translated message is determined to be incorrect and transmitting the translated message modified to the game service apparatus;
storing the edited message in a game information database by the game service apparatus.

14. The game service method of claim 13, wherein said storing the edited message is subjected after approval processing.

15. The game service method of claim 13 or 14, wherein after performing said storing the translated message, a reward is provided to a user's character by the game service apparatus.
